# EUROPEAN PATENT APPLICATION

(11) **EP 2 651 009 A2**
(43) Date of publication of application: **16.10.2013**
(21) Application number: 13162756.4
(22) Date of filing: 08.04.2013
(51) Int. Cl.: H02K 1/20, H02K 7/18, H02K 9/197, H02K 55/04

(54) **Wind turbine with improved cooling**

(30) Priority: 11.04.2012 DK 201270179
(71) Applicant: Envision Energy (Denmark) ApS, 8600 Silkeborg (DK)
(72) Inventor: Rasmussen, Peter, 5700 Svendborg (DK)
(74) Representative: Tellefsen, Jens J.

(57) **Abstract**

The present invention relates to a wind turbine comprising a wind turbine tower; a nacelle provided on the wind turbine; a wind turbine rotor hub rotatably mounted at the nacelle, the wind turbine rotor hub having one or more wind turbine blades mounted thereon; a shaft coupled to the wind turbine rotor hub, and a generator coupled to the shaft and which comprises a rotor arranged rotably in relation to a stator, wherein the rotor comprises one or more superconducting rotor coils, wherein the stator comprising one or more stator coils of a conductive material, and wherein the rotor coil and the stator coil being arranged to have interacting magnetic fields for inducing a current in the stator coil when the rotor is rotated. A stator iron and at least a part of the stator coils are thermally coupled by a first type of cooling channel arranged along an inner periphery of the stator iron. A second type of cooling channel is arranged along an outer periphery of the stator iron. The cooling channels are configured to guide a coolant for conducting heat away from the stator coil. Interconnecting pipes are configured to be coupled to at least two of the second type of cooling channels in either a first chamber or a second chamber.

## Description

### Field of the Invention

The present invention relates to a wind turbine comprising:
- a wind turbine tower;
- a nacelle provided on the wind turbine;
- a wind turbine rotor hub rotatably mounted at the nacelle, the wind turbine rotor hub having one or more wind turbine blades mounted thereon;
- a shaft coupled to the wind turbine rotor hub, and
- a generator coupled to the shaft and which comprises a rotor arranged rotably in relation to a stator, wherein the rotor comprises one or more superconducting rotor coils, wherein the stator comprising one or more stator coils of a conductive material, and wherein the rotor coil and the stator coil being arranged to have interacting magnetic fields for inducing a current in the stator coil when the rotor is rotated.

### Background of the Invention

During recent developments superconducting generators have been used for wind turbines. Superconductors are typically lighter and smaller than conventional conductors and are therefore attractive for use in wind turbines to reduce either weight or to allow for the generation of larger powers.

One example of such a superconducting wind turbine is disclosed in US 2009/0224550 A1.

Such superconducting generators have a higher efficiency and significantly lower losses than conventional generators used for wind turbines. A known problem with these conventional generators is that the windings are subjected to temperature cycling when the load on the wind turbine changes, causing repeating thermal stress on the windings, clamping structure, seals and gasket, which causes the generator to fail. Such a superconducting generator needs to be cooled by using air or water cooling in the stator. Without cooling the components, e.g. the windings, inside the generator will loose its conducting capability due to the temperature rise which in turn reduces the effectiveness of the wind turbine and its operating time.

EP 2395629 Al discloses a stator iron in the form of laminated plates for a wind turbine comprising a plurality of cooling channels integrated into the stator iron near the inner side of the stator iron. The cooling channels are connected to an external cooling unit using water to remove heat from the stator coils which are situated in between the teeth located at the outer side of the stator iron. The cooling flow is looped axially from one cooling channel to another cooling channel via an interconnecting pipe section; this axial loop causes the temperature to rise unacceptably along the flow direction and reduces the effect of the cooling.

US 2009/0256433 Al discloses a generator for a wind turbine comprising a stator iron in the form of laminated plates comprising a plurality of cooling channels formed in the plates. The cooling channels are connected to a pump circuit which pumps a transformer oil from a reservoir and into the cooling channels which is then returned to the reservoir via gravity or tubes. In this configuration, the stator is cooled by circulating the cooling fluid through the stator iron via the reservoir located at the bottom of the generator housing. This reduces the effect of the cooling as the temperature in the reservoir increases, since heat generated in the generator is not circulated outside the generator housing.

US 4146804 A discloses a stator comprising a plurality of first cooling channels arranged adjacent to the stator coils and an annulus arranged between the stator iron and the stator frame. The coolant is lead from the inlet in one of the stator chambers through the first cooling channel, into the other stator chamber and back to the outlet through the annulus. The stator teeth in this configuration are non-conductive teeth separated from the stator iron by a fibre glass plate. The separated stator teeth do not provide an effective heat transfer path from the stator coils to the annulus. Furthermore, this configuration is not able to generate a sufficient pressure in the coolant, since the coolant is lead directly from one chamber to the other chamber via the cooling channel and the annulus.

Studies have shown that temperature hot spots are formed in the stator coils, due to the distance from the cooling channels to the stator coils which act as the primary heat source. In order to remove the heat generated in the windings, it first has to be transferred from the windings to the stator iron and then through a part of the stator iron before being transferred to the cooling channel. The hot spots reduce the efficiency of the generator and increase losses in the generator; this means that the current passing through the windings needs to be reduced in order to avoid hot spots and maintain a high efficiency.

### Object of the Invention

An object of this invention is to provide means for overcoming shortcomings of the cited prior art and to allow for a more effective cooling of the stator coils during operation.

An object of this invention is to provide a configuration that allows for the use of less material for the stator coils to reduce weight and/or to allow for larger power output.

An object of this invention is to improve the coolant flow in the generator and reduce the temperature rise along the flow direction.

### Description of the Invention

An object of the invention is achieved by a wind turbine comprising:
- a wind turbine tower;
- a nacelle provided on the wind turbine;
- a wind turbine rotor hub rotatably mounted at the nacelle, the wind turbine rotor hub having one or more wind turbine blades mounted thereon;
- a shaft coupled to the wind turbine rotor hub,
- a generator coupled to the shaft and which comprises a rotor arranged rotably in relation to a stator, wherein the rotor comprises one or more superconducting rotor coils, wherein the stator comprising one or more stator coils of a conductive material, and wherein the rotor coil and the stator coil being arranged to have interacting magnetic fields for inducing a current in the stator coil when the rotor is rotated, and
- wherein the stator coils are arranged in a stator chamber inside a stator housing in which the stator iron separates the stator chamber into a first chamber and a second chamber, wherein the stator iron and at least a part of the stator coils are thermally coupled by at least one first type of cooling channel positioned adjacent to at least one

of the stator coils, wherein at least the first type of cooling channel provides a fluid transfer between the first chamber and the second chamber, and wherein at least the first type of cooling channels are configured to guide a coolant for conducting heat away from the stator coil.

The wind turbine is characterised in that the stator coil is arranged along an inner periphery of the stator iron, and at least one second type of cooling channel is arranged along an outer periphery of the stator iron, and one or more interconnecting pipes, each of which is configured to be coupled to at least two of the cooling channels, are arranged in either the first chamber or the second chamber.

This configuration allows the cooling channels to be interconnected in serial, thereby forming one or more loops which increase the flow path for the coolant. This allows the flow rate to be regulated which in turns regulates the pressure of the coolant. In one embodiment the temperature rise per cooling channel may be 0.43°C; this allows a maximum acceptable temperature rise in the generator to be reached by connecting a number of cooling channels in serial. A temperature rise of 3°C may be reached by connecting fifteen cooling channels in serial - not including the temperature rise in the first and second chambers which may increase the temperature by less than 25%. This results in a hot spot of 159° C which requires a class H insulation of the generator.

The positioning of the first type of cooling channel adjacent to the stator coil increases the efficiency of the cooling, since the first type of cooling channel is situated adjacent to the primary heat source which is the stator coils. By placing the cooling adjacent to the stator coils, the superior heat conducting capacity of the material of the stator coils, which is normally copper, can be used very effectively to transfer heat away from the stator coils via the coolant in the first type of cooling channel.

By lowering the temperature in the stator coils by 70°C, the copper losses can be reduced by 22% due to the temperature dependency of the wire resistance, this equals to 0,7% higher efficiency for a HTS (High Temperature Superconducting) generator. The effectiveness of the cooling may further be increased by creating a turbulent flow through the first type of cooling channels, since more heat may be transferred to the coolant during the flow through the first type of cooling channel.

These second type of cooling channels also cool the stator coils, thereby enabling the cooling to be even more effective, since the coolant may be circulated more efficiently through the stator chamber.

The configuration allows the rotor to be positioned adjacent to the stator housing inner shell so that the stator is arranged around the rotor which allows heat generated in the stator to be transferred to the ambient environment more effectively than if the rotor was arranged around the stator.

This configuration also allows the stator housing inner shell to have a different and thinner configuration than the stator housing outer shell since it only has to close of the stator chamber whereas the stator housing outer shell keeps the stator coils and the stator iron in place inside the stator housing.

According to a particular embodiment of the invention, the second type of cooling channel is in direct contact with a stator housing outer shell.

This configuration allows heat which is transferred into the stator iron, to be transferred to the coolant via the second type of cooling channels, thus further improving the cooling efficiency. Heat generated in or transferred to the stator back iron may further be transferred away, sine the second type of cooling channels are located adjacent to the stator back iron and the stator iron.

According to one embodiment of the invention, the first type of cooling channel is in fluid transfer with the second type of cooling channel via at least one interconnecting cooling channel.

This configuration allows the first type of cooling channel to conduct heat away from the stator coils faster, since the coolant is guided faster away from the primary heat source and out of the stator chamber. This allows for a more effective cooling of the stator coils.

According to a particular embodiment of the invention, the rotor coil is arranged in a rotor chamber inside a rotor housing which is separated from the stator housing by a rotor-stator gap.

This provides a generator configuration having a stator with a large heat transferring area, since most of the stator housing outer shell may be used to transfer heat away from the stator coils and into the ambient environment. This configuration also provides a more effective cooling, since the coolant is not only circulated inside the types of cooling channels, but also at the ends of the stator iron.

According to one embodiment of the invention, the first type of cooling channel is arranged in at least a part of the inner periphery of the stator iron which is thermally coupled to the stator coil.

This configuration of the first type of cooling channels reduces the temperatures in the stator coils and also in the gap between the stator and the rotor, thereby improving the performance of the generator. By lowering the temperature in the gap between the stator and the rotor, less heat may be transferred to the rotor and thus allowing for a more effective cooling of the rotor, in particular the rotor coils. In one embodiment the generator may be configured as a PMG (Permanent Magnet synchronous Generator) using permanent magnets instead of coils and having the first type of cooling channels positioned as mentioned above. In this embodiment the flux density, the back EMF and torque may be increased by 1,5% for the PMG by lowering the temperature in the magnets by 15°C.

According to one embodiment of the invention, the first type of cooling channel is arranged between at least a first stator coil and a second stator coil, both of which are arranged in a first set of stator coils.

This improved cooling configuration allows the use of less material for the stator coils, since the current passing through can be increased without causing the generator to overheat.

According to one particular embodiment of the invention, the stator iron comprises one or more stator teeth separating a first set of stator coils from a second set of stator coils, wherein the first type of cooling channel is arranged on at least one side of the stator tooth thermally coupled to one of the sets of the stator coils.

This configuration allows heat from a set of stator coils to be transferred directly to the first type of cooling channel, thereby leading heat away more effectively, since the heat does not have to be transferred through a part of the stator iron. The area, through which the heat transfer is affected, may be increased by extending the first type of cooling channel along the bottom of the protrusion, thereby allowing the cooling effect to be increased.

This configuration also allows heat generated by the two sets of stator coils located on either side of the first type of cooling channel to be transferred to the same cooling channel which in turn may allow for a more effective cooling of the stator coils.

According to another particular embodiment of the invention, the stator iron comprises one or more protrusions separating a first set of stator coils from a second set of stator coils, wherein the first type of cooling channel is arranged on at least a bottom of the stator iron located between a first protrusion and a second protrusion, both of which are thermally coupled to one of the sets of the stator coils.

This configuration allows heat from a set of stator coils to be transferred directly to the first type of cooling channel, thereby leading heat away more effectively, since the heat does not have to be transferred through a part of the stator iron. The area, through which the heat transfer is affected, may be increased by extending the first type of cooling channel along one of the sides of the protrusion, thereby allowing the cooling effect to be increased.

According to a particular embodiment of the invention, the stator chamber is configured to be at least partially filled with a coolant, and at least one of the types of cooling channels are configured to guide the coolant from one of the chambers to the other chamber, wherein the stator back iron is at least partially submerged in the coolant.

This allows the stator coils, in particular the stator coil heads (loops), to be submerged in the coolant, thereby providing a large area for transferring heat from the stator coil to the coolant. This provides an effective cooling of the stator coil heads which in turns prevents hot spots from forming in the stator coil heads.

According to one embodiment of the invention, the coolant may be a transformer oil, preferably a silicone oil.

The advantage of using oil cooling to cool the stator in the generator is a substantially higher cooling performance than if an air cooling is used. This allows the generator to either use a higher torque density which in turn lowers the efficiency of the generator, or to have a higher efficiency than that at air cooling.

Tests have shown that oil cooling, in particular silicone oil cooling, of the generator yields a higher benefit than if internal air cooling or external by air or water were used. In one embodiment, a generator using a current density of 4 A/mm² and oil cooling shows a hot spot in the stator coil of about 159° C, while a corresponding generator using air cooling shows a hot spot of about 260° C.

According to one embodiment, the stator further comprises an inlet and an outlet which are configured to be connected via a conduit to a stator cooling system circulating the coolant inside the stator chamber.

The cooling system allows the heat transferred to the coolant inside the generator to be circulated outside the generator, thereby allowing the heat to be transferred to the ambient environment. A heat exchanger, a cooling fan, a heat exchanging plate or fins or any combinations thereof may be used to extract heat from the coolant. The stator coil heads are directly cooled by the coolant being circulated by the cooling pump, thereby ensuring a superior cooling, even by natural circulation of the coolant.

According to one embodiment of the invention, the current density generated in the stator coils may be 4 A/mm² or more.

The improved cooling configuration allows the current density in the stator coils to be increased until the copper losses due to the temperature dependency of the wire resistance exceeds the increase in the efficiency of the generator. Reducing the current density by 10% increases the overall efficiency of the wind turbine by about 1%.

In one embodiment the current density may be increased from about 2.7 A/mm² to about 4 A/mm² or more.

### Description of the Drawing

The invention is described by example only and with reference to the drawings, wherein:
- Fig. 1: shows a wind turbine;
- Fig. 2: shows a hub and a view of the generator and the connection to the grid;
- Fig. 3: shows a generator and a stator cooling system;
- Fig. 4: shows a cross section of the stator shown in fig. 3; and
- Fig. 5: shows an enlarged section of the cross section shown in fig. 4.

### Detailed Description of the Invention

| **No** | **Part** |
|---|---|
| 100 | Wind turbine |
| 101 | Tower |
| 102 | Foundation |
| 103 | Nacelle |
| 104 | Wind turbine rotor |
| 105 | Blade |
| 106 | Hub |
| 107 | Rotor circle |
| 108 | Blade length/rotor radius |
| 109 | Mounted end/inner end |
| 110 | Free end/outer end |
| 115 | Shaft |
| 116 | Generator |
| 117 | Pitching system |
| 118 | Pitching angle |
| 200 | Converter |
| 201 | Power lines |
| 202 | Grid |
| 203 | Rotor/Generator rotor |
| 204 | Stator |
| 400 | Stator cooling system |
| 401 | Cooling fan |
| 402 | Cooling pump |
| 403 | Conduit |
| 404 | Coolant |
| 500 | Bearing |
| 501 | Generator housing |
| 502 | Stator chamber |
| 503 | Stator coils |
| 504 | Stator iron/ yoke |
| 505 | Stator housing |
| 506 | Rotor-stator gap |
| 508 | Rotor housing |
| 510 | First chamber |
| 511 | Second chamber |
| 512 | Interconnecting pipe |
| 601 | Stator housing outer shell/ outer frame/ stator back iron |
| 602 | Stator housing inner shell |
| 603 | First type of cooling channel |
| 604 | Set of stator coils |
| 605 | Wedge |
| 606 | Second type of cooling channel |
| 607 | Outer periphery |
| 608 | Inner periphery |
| 609 | Protrusion/ stator teeth |
| 610 | Side |
| 611 | Bottom |

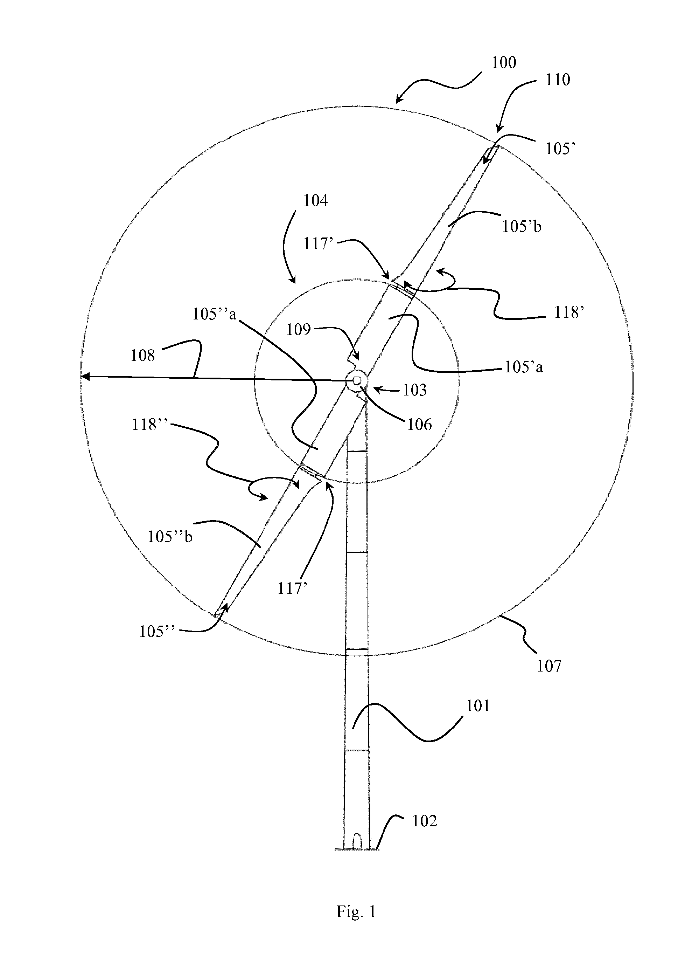

Fig. 1 shows a wind turbine 100. The wind turbine 100 has a tower 101 that is configured to raise from a foundation 102 and which tower 101 has a nacelle 103 mounted. The wind turbine 101 has a wind turbine rotor 104 with at least one blade 105, in this case two blades 105', 105".

In the shown embodiment, the wind turbine 100 is a partial pitch wind turbine, but any wind turbine configuration may be used.

The wind turbine rotor 104 includes the blades 105 that are mounted in a hub 106, so that the rotor 104 can rotate and circumscribe a rotor circle 107 with a rotor radius that is equivalent to the blade lengths 108.

Each blade 105 has a mounted end 109 or an inner end for mounting the blade 105 at the hub 105 and opposite a free end 109 or an outer end.

The rotor 103 rotates in a rotational plane (not shown) around an axis that is extended in a shaft 115 (not shown in this figure) connected to a generator 116 (not shown in this figure).

A blade 105 on a partial pitch wind turbine 100 comprises an inner blade section 105a towards the hub 106 and an outer blade section 105b towards the outer end 110.

The inner blade section 105a and the outer blade section 105b are parted by the pitching system 117 regulating the pitching angle 118.

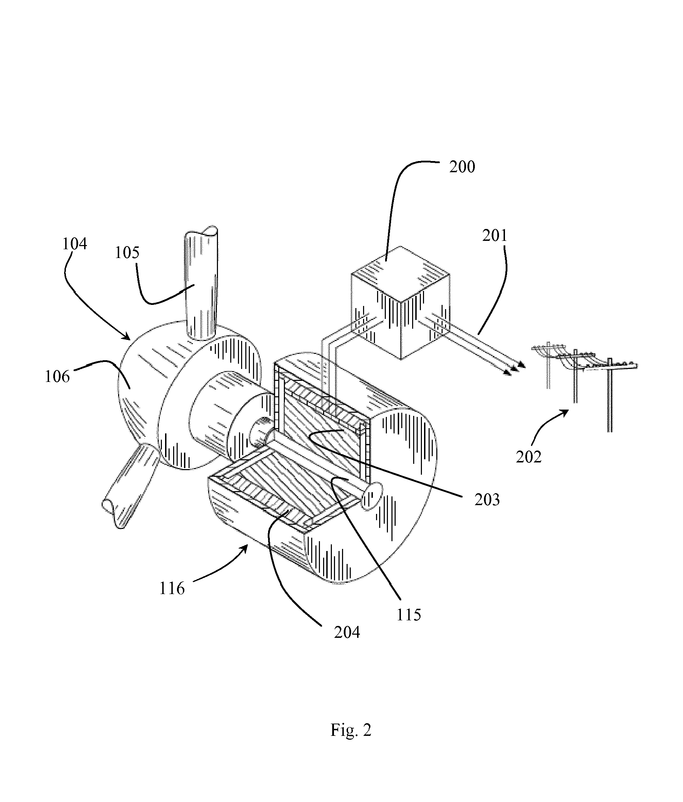

Fig. 2 illustrates a schematic view of a part of a wind turbine with a wind turbine rotor 104 with blades 105 on a hub 106 that is extended via a shaft 115 for transferring mechanical energy to a generator 116 that converts mechanical energy to electrical energy.

The generator 116 is connected to a converter 200 that via power lines 201 delivers the produced electrical energy to a grid 202.

The converter 200 is configured to match the wind turbine to the grid 202 according to given grid codes or as a stand alone unit. It is understood by the person skilled in the art to perform the configuration of the converter 200 so that the wind turbine generator 116 delivers power within the specifications given by a particular grid code. It is also understood that the person skilled in the art will be able to configure the converter 200 to provide the correct brake torque to the generator 116 as required to prevent overspeed of the wind turbine rotor 104.

The generator 116 is configured with a rotor 203 which is the generator rotor, that is substantially rigidly connected to the shaft 115 and arranged for rotating within a stator 204 so that the mechanical energy will be converted to electrical energy due to an electromagnetical interaction between the rotor 203 and the stator 204 due to electromagnetical means provided for in the rotor 203 and the stator 204 as will be disclosed.

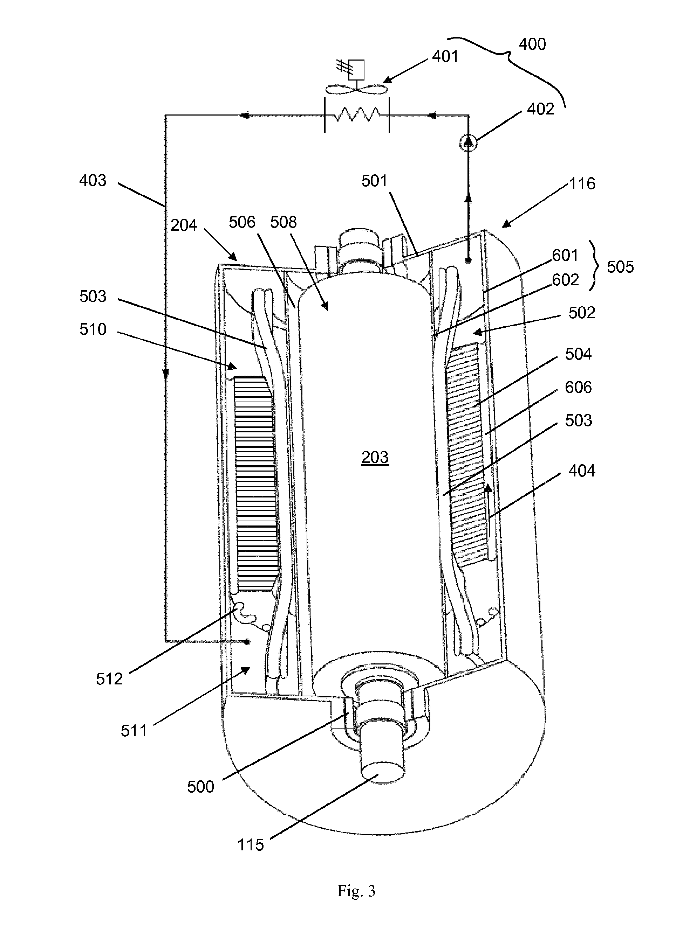

Fig. 3 shows a partial cross sectional view of an embodiment of a generator 116 that is a super conducting generator.

In this embodiment, a rotor housing 508 is configured to maintain a rotor chamber (not shown) to conditions capable of housing a superconductor which superconductor can be a high temperature superconductor (HTS). In particular the rotor housing 508 is configured to house low temperature or cryogenic temperatures required to provide superconducting conditions. In one example, the configuration is for liquid nitrogen. In another example the configuration is for liquid helium.

The generator 116 has a stator 204 comprising a stator chamber 502 in which one or more stator coils 503 and a stator iron 504 is arranged. The stator chamber 502 is defined by a stator housing inner shell 602 and a stator housing outer shell 601 which are closed off at either end by a stator housing end plate. The stator housing inner shell 602 faces the rotor 203 and extends parallel to the rotor housing 508, while the stator housing outer shell 601 faces away from the rotor 203 and may be a stator back iron or a outer frame, e.g. a cover. The stator housing 505 forms a part of a generator housing 501 surrounding the rotor 203 wherein the stator 204 and the rotor 203 are separated by a rotor-stator gab 506. The stator iron 504 separates the stator chamber 502 into a first chamber 510 and a second chamber 511 which are in fluid transfer with each other via at least one first type of cooling channel 603 and/or at least one second type of cooling channel 606.

In another embodiment, the rotor 203 is configured as a permanent magnet generator (PMG) wherein the rotor coils (not shown) is replaced by a magnetic arrangement in the form of permanent magnets. In this embodiment, the stator 204 is configured to have a second magnetic arrangement in the form of permanent magnets instead of the stator coils 503. The magnets used in the rotor 203 and/or the stator 204 may be rare earth magnets, e.g. made of neodymium or samarium-cobalt.

The generator housing 501 is configured in such as way that the shaft 115 can rotate the rotor 203 inside the stator 204. In one embodiment the rotor housing 508 is stationary in relation to the stator 204. In another embodiment the rotor housing 508 rotates with the rotor 203 in relation to the stator 204.

In this embodiment, the shaft 115 is connected to the rotor 203 of the generator and supported in that at least one bearing 500 allows the shaft 115 to rotate in the bearings 500. The shaft 115 is extending essentially centrally through the generator 116.

The stator cooling system 400 is coupled to a generator 116 which is connected to the shaft 115. The stator 204 of the generator comprises connection means in the form of an inlet and an outlet (both not shown) which are in fluid transfer with a cooling pump 402 and a cooling fan 401 via a conduit 403.

All the components 401, 402, 403 of the stator cooling system 400 are configured to circulate a coolant 404 through the generator 116 thereby cooling the generator 116 and in particular the stator 204. The inlet and the outlet may be coupled to the first chamber 510 and the second chamber 511 at optimal positions so that the coolant 404 is circulated through the stator chamber 502 and through the stator cooling system 400.

In this embodiment, the stator chamber 502 is at least partially filled with a coolant 404 which is thermally coupled to the stator iron 504. In one embodiment, the stator coils 505 and the stator coil heads (illustrated in the figure) are submerged in the coolant 404 so that the stator coil heads are directly cooled by the coolant 404 in the stator.

The stator iron 504 may be formed by a number of laminated stator plates, as indicated in the figure, or from a single piece. The second type of cooling channel 606 is configured at the orifices in fluid contact with the first chamber 510 and the second chamber 511 in such a way that one or more interconnecting pipes 512 may be coupled to at least two of the second type of cooling channels 606 in at least one of the chambers 510, 511. The interconnecting pipe 512 is formed as pipe sections or tube sections made from a suitable material capable of being used in the stator 204.

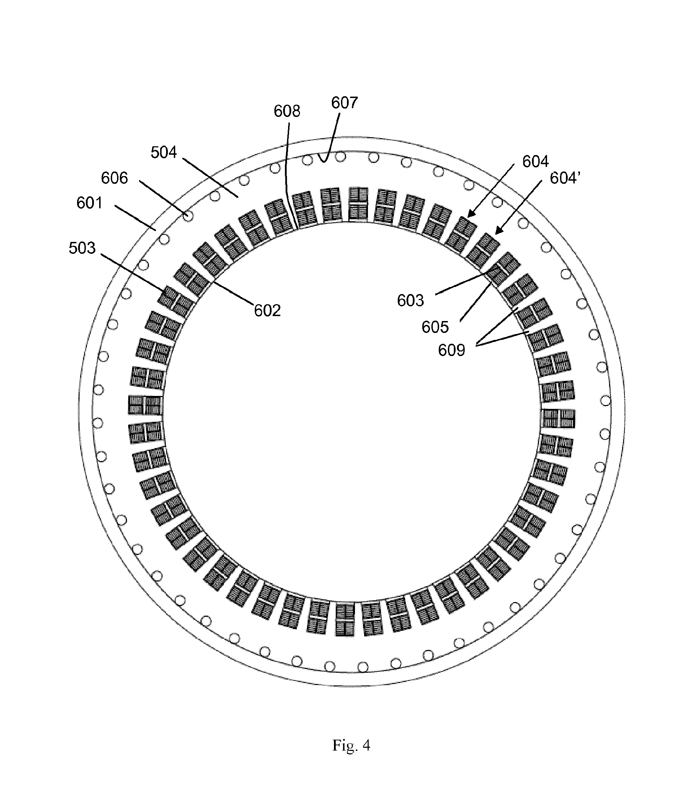

Fig. 4 shows a cross section of a stator 204 that is used in the generator 116 shown in fig. 3.

The stator iron 504 is at an outer periphery 607 thermally coupled to the stator housing outer shell 601 so that heat from the stator coils 503 may be transferred via the stator iron 504 to the stator housing outer shell 601. The second type of cooling channels 606 are arranged along the outer periphery 607 so that the second type of cooling channel 606 is in direct contact with the stator housing outer shell 601.

The stator iron 504 is at an inner periphery 608 thermally coupled to the stator housing inner shell 601. The stator coils 503 are arranged along the inner periphery 608 of the stator iron 504. The first type of the cooling channel 603 is arranged along at least a part of the inner periphery 608 of the stator iron which is thermally coupled to the stator coil 503.

The stator iron 504 has one or more protrusions 609 in the form of stator teeth that face the rotor 203 (not shown in this figure). The protrusions 609 are arranged along the stator housing inner shell 602 so that only the protrusions 609 are thermally coupled to the stator housing inner shell 602.

The stator coils 503 are arranged in one or more sets 604 which are positioned in the spacings formed between the protrusions 609. The sets 604 of stator coils 503 are held in place by one or more wedges 605 that are fixed to the protrusions 609 using any known fixing technologies.

At the opposite side of the sets 604 of stator coils 503 one or more recesses are arranged along the stator housing outer shell 601 in which at least one of the second type of cooling channels 606 are located.

The stator 203 may be formed as an annular shape formed by one or more sections that may be jointed together.

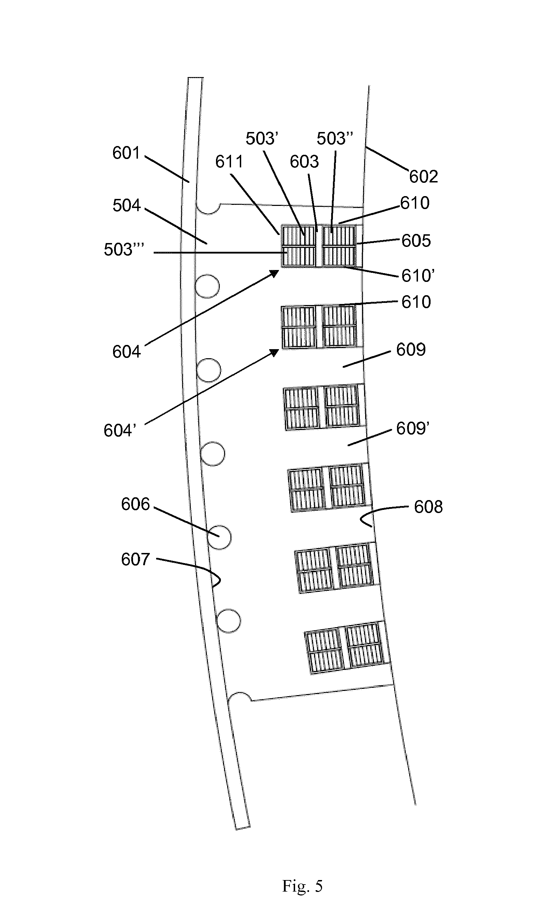

Fig. 5 shows an enlarged section of the cross section of the stator 203 shown in fig. 4.

In this embodiment, one or more cooling channels 603 may be arranged adjacent to or in the vicinity of the sets 604 of stator coils 503 so that the cooling channels 603 are thermally coupled to the stator coils 503 either directly or via a very short section of the stator iron 504.

The first type of cooling channel 603 is arranged in at least a part of the periphery of the stator iron 504 that is thermally coupled to the set 604 of stator coils 503. The first type of cooling channel 603 may be arranged at a bottom 611 of the stator iron 504 which is located between two protrusions 609, 609', and/or at a side 610 of the protrusion 609 thermally coupled to a set 604 of stator coils. The heat exchanging area between the first type of cooling channel 603 and the set 604 of stator coils 503 may be increased by arranging the first type of cooling channel 603 on both the side 608 and the bottom 609.

The first type of cooling channel 603 may also or instead be arranged between at least two stator coils 503', 503" extending along the side 610 of the stator iron 504 or between at least two stator coils 503', 503'" extending along the bottom 611 of the stator iron 504. The heat exchanging area between the first type of cooling channel 603 and the set 604 of stator coils 503 may likewise be increased by arranging one or more cooling channels 603 parallel to the side 610 and/or the bottom 611 of the stator iron 504 so that a number of cooling channels 603 are formed within a set 604 of stator coils 503.

The first type of cooling channel 603 holds the individual stator coils 503 in place, thereby preventing the stator coils 503 from moving within the set 604 of stator coils 503, and is formed as a hollow structure having one or more through holes, two or more spacers situated between at least two adjacent stator coils 503 with an intermediate gap or another suitable structure forming at least one through holes allowing the coolant 404 to pass through the holes.

The first type of cooling channel 603 may be formed as a recess or channel (not shown) in at least one of the stator coils 503.

At least one first type of cooling channel 603 may be in fluid transfer with at least one of the second type of cooling channel 606 via at least one interconnecting cooling channel. In a particular embodiment, the first type of cooling channel 603 is connected to a second type of cooling channel 606 which is positioned closest to that particular first type of cooling channel 603. The interconnecting cooling channel may be formed within the stator iron 504.

The first type of cooling channel 603 and/or the second type of cooling channel 606 may be formed by a non-conductive or non-magnetic material so that it does not interfere with the magnetic fields generated by the stator coils 503 and the rotor coils.

## Claims

1. A wind turbine (100) comprising:
- a wind turbine tower (101);
- a nacelle (103) provided on the wind turbine (100);
- a wind turbine rotor hub (106) rotatably mounted at the nacelle (103), the wind turbine rotor hub (106) having one or more wind turbine blades (105) mounted thereon;
- a shaft (115) coupled to the wind turbine rotor hub (106), and
- a generator (116) coupled to the shaft (115) and which comprises a rotor (203) arranged rotably in relation to a stator (204), wherein the rotor (203) comprises one or more superconducting rotor coils, wherein the stator (204) comprises one or more stator coils (503) of a conductive material, and wherein the rotor coil and the stator coil (503) being arranged to have interacting magnetic fields for inducing a current in the stator coil (503) when the rotor (203) is rotated, and
- wherein the stator coils (503) are arranged in a stator chamber (502) inside a stator housing (505) in which a stator iron (504) separates the stator chamber (502) into a first chamber (510) and a second chamber (511), wherein the stator iron (504) and at least a part of the stator coils (503) are thermally coupled by at least one first type of cooling channel (603) positioned adjacent to at least one of the stator coils (503), wherein at least the first type of cooling channel (603, 606) provides a fluid transfer between the first chamber (510) and the second chamber (511), and wherein at least the first type of cooling channels (603, 606) are configured to guide a coolant (404) for conducting heat away from the stator coils (503),
**characterised in that**
- the stator coil (503) is arranged along an inner periphery (608) of the stator iron (504) and at least one second type of cooling channel (606) is arranged along an outer periphery (607) of the stator iron (504), and
- one or more interconnecting pipes (512), each of which is configured to be coupled to at least two of the cooling channels (606), are arranged in either the first chamber (510) or the second chamber (511).

2. A wind turbine (100) according to claim 1, wherein the second type of cooling channel (606) is in direct contact with a stator housing outer shell (601).

3. A wind turbine (100) according to any one of claims 1-2, wherein the first type of cooling channel (603) is in fluid transfer with the second type of cooling channel (606) via at least one interconnecting cooling channel.

4. A wind turbine (100) according to any one of claims 1-3, wherein
- the rotor coil is arranged in a rotor chamber inside a rotor housing, which is separated from the stator housing (505) by a rotor-stator gap (506).

5. A wind turbine (100) according to any one of claims 1-4, wherein the first type of cooling channel (603) is arranged in at least a part of the inner periphery (608) of the stator iron (504), which is thermally coupled to the stator coil (503).

6. A wind turbine (100) according to any one of claims 1-5, wherein the first type of cooling channel (603) is arranged between at least a first stator coil (503') and a second stator coil (503", 503"'), both of which are arranged in a first set (604) of stator coils (503).

7. A wind turbine (100) according to any one of claims 5-6, wherein the stator iron (504) comprises one or more stator teeth (607) separating a first set (604) of stator coils (503) from a second set (604') of stator coils (503), wherein the first type of cooling channel (603) is arranged on at least one side (610, 610') of the stator tooth (607) being thermally coupled to one of the sets (604, 604') of the stator coils (503).

8. A wind turbine (100) according to any one of claims 5-7, wherein the stator iron (504) comprises one or more stator teeth (607) separating a first set (604) of stator coils (503) from a second set (604') of stator coils (503), wherein the first type of cooling channel (603) is arranged on at least a bottom (611) of the stator iron (504) located between a first stator tooth (607) and a second stator tooth (607'), both of which are thermally coupled to one of the sets (604, 604') of the stator coils (503).

9. A wind turbine (100) according to any one of the preceding claims, wherein the stator chamber (502) is configured to be at least partially filed with a coolant (404) and at least one of the types of cooling channels (603, 606) are configured to guide the coolant (404) from one of the chambers (510, 511) to the other chamber (510, 511), wherein the stator iron (504) is at least partially submerged in the coolant.

10. A wind turbine (100) according to claim 9, wherein the coolant (404) is a transformer oil, preferably a silicone oil.

11. A wind turbine (100) according to any one of the preceding claims, wherein the stator (204) further comprises an inlet and an outlet, which are configured to be connected via a conduit (403) to a stator cooling system (400) circulating the coolant inside the stator chamber (502).

12. A wind turbine (100) according to any one of the preceding claims, wherein the current density generated in the stator coils (503) is 4 A/mm² or more.
